# EUROPÄISCHE PATENTSCHRIFT

(11) **EP 3 181 493 B1**
(45) Veröffentlichungstag und Bekanntmachung des Hinweises auf die Patenterteilung: **17.11.2021**
(21) Anmeldenummer: 16201807.1
(22) Anmeldetag: 01.12.2016
(51) Int. Cl.: B65G 19/02

(54) **LAUFROLLENGEFÜHRTES FÖRDERORGAN UND FÖRDERANLAGE MIT DERARTIGEN FÖRDERORGANEN**
ROLLER-GUIDED LOAD CARRIER AND CONVEYOR SYSTEM COMPRISING SUCH LOAD CARRIERS
ORGANE DE TRANSPORT GUIDÉ PAR GALET ET INSTALLATION DE TRANSPORT COMPRENANT DE TELS ORGANES DE TRANSPORT

(30) Priorität: 16.12.2015 CH 18452015
(43) Veröffentlichungstag der Anmeldung: 21.06.2017
(73) Patentinhaber: Ferag AG, 8340 Hinwil (CH)
(72) Erfinder: Fenile, Roberto, 8623 Wetzikon (CH)
(74) Vertreter: Frei Patent Attorneys

(56) Entgegenhaltungen:
- EP-A1- 0 856 480
- DE-B- 1 013 047
- DE-C- 247 498
- FR-A1- 2 458 213
- US-A- 5 819 906

## Beschreibung

Die Erfindung liegt auf dem Gebiet der Transport- und Fördertechnik, insbesondere der Intra-Logistik und betrifft ein laufrollengeführtes Förderorgan für eine Förderanlage, insbesondere für eine Hängeförderanlage. Das Förderorgan enthält einen Basiskörper, mehrere an zwei, einander entgegen gesetzt liegenden Seiten am Basiskörper drehbar gelagerte Laufrollen sowie ein am Basiskörper angeordnetes Halteglied zum Halten, insbesondere zum hängenden Halten eines zu fördernden Gegenstandes.

Ferner betrifft die Erfindung auch eine Förderanlage, insbesondere eine Hängeförderanlage mit mehreren solcher Förderorganen sowie mit einem Längsführungskörper, welcher einen Führungskanal ausbildet, entlang welchem die Förderorgane zum Fördern, insbesondere zum hängenden Fördern von Gegenständen rollend bewegbar sind.

In automatisierten Warenlagern, weitläufigen Produktionsstätten und beim Fördern von Waren ganz allgemein besteht der Bedarf, Güter mittels Hängefördereinrichtungen zwischen Bearbeitungsstationen zu fördern, in Warenlagern zwischenzuspeichern und wieder aus Warenlagern abzurufen sowie für den Versand bereitzustellen.

So ist es aus dem Stand der Technik bekannt, Gegenstände wie Kleider aber auch Fördertaschen, welche ein Fördergut aufnehmen, mittels Förderorganen, welche über Laufrollen entlang eines Führungsprofils abrollen, in Hängefördereinrichtungen zu fördern.

So beschreibt beispielsweise die Veröffentlichungsschrift EP 1 690 811 A1 ein Transport-System für hängende Gegenstände mit einem Führungsprofil, welches einen Führungskanal ausbildet, in welchem Halteelemente mittels eines Rollenpaares verschiebbar geführt sind. Die Halteelemente werden von bolzenförmigen Mitnehmern einer angetriebenen Mitnehmerkette bewegt.

Die Veröffentlichungsschrift DE 10 2010 010 107 A1 beschreibt eine Förderanlage zum Fördern und Aufstauen von hängenden Gegenständen mit einer an einem Führungsprofil gelagerten und angetriebenen Mitnehmerkette und darunter auf Rollen gelagerten Förderorganen, an welchen Gegenstände als Fördergut aufgehängt sind. Die Förderorgane werden von der Mitnehmerkette in einer Förderrichtung befördert und bei Bedarf mittels einer Stoppvorrichtung angehalten und aufgestaut. Der Antrieb der Förderorgane erfolgt durch an der Unterseite der Mitnehmerkette angeordneten Mitnehmern, welche am Basiskörper der Förderorgane angreifen.

Die Veröffentlichungsschrift EP 0 856 480 A1 beschreibt ein schienengeführtes Transportmittel zum Fördern von Druckereierzeugnissen. Das Transportmittel umfasst einen U-förmig ausgestalteten Transportmittelkörper, dessen beiden Schenkel an den gegenüberliegend angeordneten Seiten je zwei kreuzweise gegengleich versetzt angeordnete Rollmittel aufweisen, wobei die Rollmittel in Verlaufsrichtung der Schenkel derart gegenseitig beabstandet angeordnet sind, dass eine Führungsschiene zwischen den Rollmitteln Platz findet.

Die bekannten Förderorgane, im Stand der Technik auch als Halteelemente bezeichnet, weisen den Nachteil auf, dass deren Führung recht instabil ist und die Halteelemente daher bei schnell ändernden Beschleunigungen zum Schwingen bzw. Wackeln neigen. Dies liegt unter anderem daran, dass die Laufrollen lediglich zwei Auflagestellen zum Führungsprofil ausbilden, welche überdies noch in Förderrichtung betrachtet auf gleicher Höhe liegen.

Die bekannten Förderorgane sind folglich insbesondere für leichte Fördergüter wie zum Beispiel Kleider geeignet. Die Förderorgane sind jedoch zur Förderung von vergleichsweise schweren Gegenständen nicht besonders geeignet. Dies liegt daran, dass wie bereits erwähnt die Auflage der Führungsrollen für eine stabile Führung ungenügend ist. Dadurch sind die hohen Trägheitskräfte von schweren Fördergütern, welche bei Beschleunigungen zwangsläufig auftreten, kaum kontrollierbar. Eine Kontrolle über die sich während der Förderung bei Beschleunigungen entfaltenden Trägheitskräfte ist allerdings eine Voraussetzung für einen sicheren Betrieb der Förderanlage insbesondere bei vergleichsweise hohen Fördergeschwindigkeiten.

Es ist daher eine Aufgabe der vorliegenden Erfindung ein Förderorgan und eine Förderanlage vorzuschlagen, welche eine stabile, sichere, ruhige und störungsfreie Förderung auch von vergleichsweise schweren Fördergütern erlaubt.

Ferner soll die Zuverlässigkeit und Sicherheit der Förderung auch bei vergleichsweise hohen Fördergeschwindigkeiten noch gewährleistet sein.

Im Weiteren sollen die Förderorgane zwecks platzsparender Zwischenspeicherung kompakt aneinander geschoben, d.h. aufgestaut werden können.

Die Aufgabe wird durch die Merkmale der unabhängigen Ansprüche 1 und 11 gelöst. Die abhängigen Ansprüche, die Beschreibung und die Figuren beinhalten besondere Ausführungsformen und Weiterbildungen der Erfindung.

Die erfindungsgemässe Vorrichtung zeichnet sich nun dadurch aus, dass an den beiden Seiten des Basiskörpers jeweils zwei Laufrollen kreuzweise gegengleich versetzt angeordnet sind, und das Förderorgan mit den Laufrollen derart ausgebildet ist, dass ein Abschnitt des Förderorgans mit mindestens jeweils einer Laufrolle der beiden Seiten des Basiskörpers im Führungskanal eines Längsführungskörpers rollend bewegbar ist.

Das Förderorgan umfasst also mindestens vier Laufrollen. Das Förderorgan umfasst insbesondere exakt vier Laufrollen.

Die Laufrollen sind beispielsweise über Achsstummel am Basiskörper befestigt. Die Laufrollen sind insbesondere auf die Achsstummel aufgesteckt oder aufgeschraubt. Der Basiskörper ist folglich zwischen den beidseitig angebrachten Laufrollen angeordnet.

Die beiden Laufrollen auf einer ersten Seite des Basiskörpers liegen insbesondere in einer gemeinsamen ersten Ebene. Die beiden Laufrollen auf der zweiten Seite des Basiskörpers liegen insbesondere in einer gemeinsamen zweiten Ebene, welche von der ersten Ebenen beabstandet ist und parallel zu dieser verläuft. Der Basiskörper ist insbesondere zwischen dieser ersten und zweiten Ebene angeordnet.

Dies erlaubt die Führung der Laufrollen entlang von beidseits vom Basiskörper angeordneten Laufflächen in Förderrichtung. Die Laufflächen können wie weiter unten noch näher erörtert durch Führungsleisten ausgebildet werden.

Die Laufrollen des Förderorgans sind jeweils insbesondere derart gegenseitig versetzt und voneinander beabstandet angeordnet, dass eine erste Paarung von Laufrollen entlang von in einer ersten Ebene angeordneten Laufflächen und eine zweite Paarung von Laufrollen entlang von in einer zweiten Ebene angeordneten Laufflächen abrollt. Die erste und zweite Ebene sind voneinander beabstandet und verlaufen parallel zueinander. Eine Paarung von Laufrollen wird dabei von jeweils einer Laufrolle von beiden Seiten ausgebildet.

Der Basiskörper wird mit einem Abschnitt insbesondere entlang eines von einem Längsführungskörper ausgebildeten Führungsspaltes in Förderrichtung geführt. Der Führungsspalt wird insbesondere zwischen zwei, insbesondere einander gegenüber liegenden, Führungsleisten ausgebildet. Die Führungsleisten bilden insbesondere jeweils eine Lauffläche für Laufrollen aus. Der Basiskörper verläuft folglich mit einem Abschnitt durch den Führungsspalt. Der Führungsspalt ist insbesondere schlitzförmig.

Die Führungsleisten, welche jeweils eine Lauffläche ausbilden, sind insbesondere Teil eines Längsführungskörpers.

Die Drehachsen der Laufrollen verlaufen insbesondere parallel zueinander.

Die Laufrollen weisen in einer Parallelprojektion parallel zu ihren Drehachsen eine "X"-förmige Anordnung auf. Die jeweils auf einem gemeinsamen Kreuzschenkel angeordneten Laufrollen sind auf derselben Seite des Basiskörpers angeordnet. Die jeweils auf einem gemeinsamen Kreuzschenkel angeordneten Laufrollen liegen insbesondere in einer gemeinsamen Ebene.

Gemäss einer Weiterbildung sind die beiden Laufrollen auf den jeweiligen Seiten des Basiskörpers jeweils derart gegenseitig versetzt und voneinander beabstandet angeordnet, dass ein jeweils Führungsabschnitt einer Führungsleiste zwischen den Laufrollen Platz findet.

Gemäss einer besonderen Ausführungsform dieser Weiterbildung sind die beiden Laufrollen auf den jeweiligen Seiten des Basiskörpers jeweils derart gegenseitig versetzt und voneinander beabstandet angeordnet, dass die beidseitig vom Basiskörper zwischen den jeweiligen Laufrollenpaare hindurchführbaren Führungsabschnitte von Führungsleisten parallel zueinander verlaufen.

Die beidseitig vom Basiskörper zwischen den jeweiligen Laufrollenpaaren hindurchführbaren Führungsabschnitte von Führungsleisten liegen insbesondere in einer gemeinsamen Ebene.

Der Basiskörper bildet eine parallel zu den Drehachsen der Laufrollen verlaufende Mittelängsebene aus. Die Mittelängsebene ist in einer frei hängenden Position des Förderorgans insbesondere vertikal ausgerichtet.

Die Mittelängsebene verläuft insbesondere jeweils zwischen den Drehachsen zweier auf einer Seite des Basiskörpers angeordneten Laufrollen hindurch.

Gemäss einer Weiterbildung ragt nun mindestens eine Laufrolle in einer Laufrichtung des Förderorgans über den Basiskörper hinaus bzw. steht diesem vor.

Die Laufrichtung entspricht der möglichen Bewegungsrichtung der Förderorgane in der Förderanlage entlang einer Förderbahn. Die Laufrichtung entspricht folglich der Förderrichtung oder einer der Förderrichtung entgegen gesetzten Richtung. Die Laufrichtung ist insbesondere parallel zur Flächennormalen der Längsmittelebene.

Gemäss einer besonderen Ausführungsform dieser Weiterbildung ragen sämtliche Laufrolle in einer Laufrichtung über den Basiskörper hinaus bzw. stehen diesem vor.

Es ragen insbesondere in beiden, einander entgegengesetzt gerichteten Laufrichtungen Laufrollen über den Basiskörper hinaus.

Gemäss einer Weiterbildung bildet der Basiskörper an den beiden, einander entgegengesetzt liegenden Seiten, an welchen die Laufrollen in Laufrichtung über den Basiskörper hinaus ragen, einen Kontaktabschnitt aus. Der Kontaktabschnitt ist derart angeordnet und ausgebildet ist, dass eine mögliche Berührung mit einem vor-oder nachlaufenden, gleichartig ausgebildeten Förderorgan mindestens am Kontaktabschnitt erfolgt.

Gleichartig bedeutet, dass die Basiskörper bzw. die Förderorgane die gleiche Form und Dimension bzw. Geometrie aufweisen. Gleichartig bedeutet insbesondere, dass die Basiskörper bzw. die Förderorgane baugleich sind.

Der Kontaktabschnitt an der genannten Seiten des Basiskörpers kann durchgängig oder unterbrochen sein.

Gemäss einer Weiterbildung erfolgt eine mögliche Berührung mit einem vor- oder nachlaufenden, gleichartig ausgebildeten Förderorgan ausschliesslich über den Kontaktabschnitt.

Gemäss einer Weiterbildung ist die mindestens eine Laufrolle derart am Basiskörper angeordnet und der Basiskörper derart ausgebildet, dass bei einer Berührung mit einem vor- oder nachlaufenden, gleichartig ausgebildeten Förderorgan am Kontaktabschnitt die mindestens eine Laufrolle in Laufrichtung mit dem benachbarten Förderorgan bzw. mit dessen Basiskörper überlappt.

Gemäss einer besonderen Ausführungsform dieser Weiterbildung sind sämtliche Laufrollen derart am Basiskörper angeordnet und der Basiskörper derart ausgebildet, dass bei einer Berührung mit einem vor- oder nachlaufenden, gleichartig ausgebildeten Förderorgan am Kontaktabschnitt die Laufrollen in Laufrichtung mit den benachbarten Förderorganen bzw. mit deren Basiskörper überlappen.

Gemäss einer Weiterbildung ist am Basiskörper mindestens ein dem Basiskörper in Laufrichtung vorstehender Eingriffabschnitt angeordnet bzw. wird am Basiskörper ausgebildet.

Der Basiskörper mit dem Eingriffabschnitt ist insbesondere derart ausgebildet, dass bei einer Berührung mit einem vor- oder nachlaufenden, gleichartig ausgebildeten Förderorgan am Kontaktabschnitt der Eingriffabschnitt in Laufrichtung mit dem benachbarten Förderorgan bzw. mit dessen Basiskörper überlappt.

Gemäss einer besonderen Ausführungsform dieser Weiterbildung ist der vorstehende Eingriffabschnitt zugleich Befestigungsabschnitt zum Befestigen einer Laufrolle. Gemäss einer besonderen Ausführungsform dieser Weiterbildung ist am Basiskörper für jede Laufrolle jeweils ein Befestigungsabschnitt angeordnet, welcher zugleich als Eingriffabschnitt ausgebildet ist, welcher in Laufrichtung dem Basiskörper vorsteht.

Der Eingriffabschnitt bzw. Befestigungsabschnitt kann zum Beispiel laschen- bzw. zungenartig sein.

Die Drehachse der Laufrolle ist insbesondere im Bereich des Befestigungsabschnitts angeordnet. Sind die Laufrollen über Achsstummel am Basiskörper befestigt, so sind die Achsstummel insbesondere im Bereich des Befestigungsabschnitt angeordnet.

Gemäss einer Weiterbildung ist am Basiskörper mindestens eine Aussparung zur Aufnahme des Eingriffabschnittes eines benachbarten, gleichartig ausgebildeten Förderorgans angeordnet. Der Eingriff des Eingriffabschnittes in die Aussparung ist insbesondere passgenau. Hierzu sind der vorstehende Befestigungsabschnitt und die Aussparung insbesondere gegengleich ausgestaltet.

Der Eingriffabschnitt greift insbesondere in überlappender Weise in die Aussparung ein.

Gemäss einer besonderen Ausführungsform dieser Weiterbildung ist am Basiskörper mindestens eine Aussparungen zur Aufnahme jeweils eines als Eingriffabschnitt ausgebildeten Befestigungsabschnittes einer Laufrolle eines benachbarten, gleichartig ausgebildeten Förderorgans angeordnet.

Der Basiskörper enthält insbesondere eine, der Anzahl Eingriffabschnitte entsprechende Anzahl Aussparungen.

Die Aussparung ist insbesondere in Laufrichtung gegenüber einem am selben Basiskörper angeordneten, vorstehenden Eingriffabschnitt versetzt angeordnet.

In der Folge überlappen die Basiskörper zweier benachbarter Förderorgane, welche sich am Kontaktabschnitt berühren am Ort des Eingriffs des Eingriffabschnittes in die Aussparung.

Der Eingriff eines als Eingriffabschnitt ausgebildeten Befestigungsabschnittes in die Aussparung eines benachbarten, gleichartig ausgebildeten Förderorgans erlaubt ferner auch die überlappende Anordnung der betreffenden Laufrolle mit dem benachbarten Förderorgan bzw. mit dessen Basiskörper.

Gemäss einer Weiterbildung sind die mindestens eine Aussparung und der mindestens eine Eingriffabschnitt derart ausgebildet, dass zwei benachbarte, gleichartig ausgebildete und sich am Kontaktabschnitt berührende Förderorgane durch den Eingriff des Befestigungsabschnittes in die Aussparung des benachbarten Förderorgans gegen eine Verschiebung relativ zueinander senkrecht zur Laufrichtung und senkrecht zu den Drehachsen der Laufrollen gesichert ist.

Die mindestens eine Aussparung und der mindestens eine Befestigungsabschnitt bilden so in diesem Kontext eine formschlüssige Verbindung aus.

Das heisst, zwei benachbarte, gleichartig ausgebildete und sich am Kontaktabschnitt berührende Förderorgane sind in einer hängenden Position gegen eine vertikale Verschiebung relativ zueinander gesichert.

Die Sicherung gegen eine vertikale Verschiebung relativ zueinander bedeutet, dass zwischen benachbarten Förderorganen Gewichtskräfte übertragen werden können. Dies erlaubt in der aufgereihten, d.h. aufgestauten Speicherformation einen Lastenausgleich zwischen den Förderorganen. Dadurch herrscht innerhalb einer aufgereihten Formation von dicht aneinander liegenden und sich insbesondere an den Kontaktabschnitten berührenden Förderorganen eine ausgeglichene Gewichtslast, wodurch die einzelnen Förderwagen geschont werden.

Ferner verbessert ein solcher formschlüssiger Verbund der Förderorgane gegen eine gegenseitige vertikale Verschiebung auch die Bewegung der Förderorgane in Gruppenformation.

Die Ausbildung des Basiskörpers und die Anordnung der Laufrollen am Basiskörper des Förderorgans sind im Weiteren insbesondere dergestalt, dass mehrere aneinander gereihte und sich über die Kontaktabschnitte berührende Förderorgane in einer hängenden Position jeweils eine obere Reihe und eine untere Reihe von jeweils hintereinander angeordneten Laufrollen ausbilden.

Das Halteglied am Förderorgan kann praktisch beliebig ausgebildet sein. Das Halteglied weist allerdings insbesondere eine Durchgangsöffnung zum Einhängen eines Bügels, einer Tasche, eines Beutels oder allgemein eines Hakens auf.

Das Halteglied kann aber auch zum klemmenden Halten ausgelegt sein. Andere Haltemechanismen, welche zum Beispiel mittels magnetischen Kräften, Haft- oder Formschlussverbindungen etc. funktionieren, sind ebenfalls möglich.

Das Halteglied kann integraler Bestandteil des Basiskörpers sein. Das Halteglied kann auch ein mit dem Basiskörper verbindbarer Körper sein.

Das Halteglied ist in einer frei hängenden Position des Förderorgans insbesondere unterhalb der Laufrollen angeordnet.

Gemäss einer Weiterbildung enthält das Förderorgan ein am Basiskörper angeordnetes Mitnehmerkontaktelement zur Herstellung eines Mitnahmekontaktes mit einem Mitnehmer. Das Mitnehmerkontaktelement kann zum Beispiel ein Stift, ein Zapfen oder eine Zunge sein. Das Mitnehmerkontaktelement kann integraler Teil des Basiskörpers sein.

Das Mitnehmerkontaktelement ist in einer frei hängenden Position des Förderorgans insbesondere oberhalb der Laufrollen angeordnet.

Gemäss einer Weiterbildung ist am Basiskörper ein elektronisch oder optisch auslesbares Identifikationselement angeordnet.

Das Identifikationselement kann zum Beispiel ein Datenspeicherelement, wie RFID-Transpondcr, oder ein Strichcode oder Matrixcodc sein. Das Identifikationselement kann auf den Basiskörper aufgebracht oder in diesen integriert sein.

Das Identifikationselement dient zum Beispiel zur Speicherung von Identifikationsinformationen zum Förderorgan bzw. zu dem von diesem geförderten Fördergut. Ferner können in dem als Datenspeicherelement ausgelegten Identifikationselement auch Information zum zurückgelegten bzw. zurückzulegenden Förderweg gespeichert sein.

Der Basiskörper ist insbesondere als flacher Körper ausgebildet. Das heisst, seine Länge und Breite sind wesentlich grösser als seine Höhe. Der Basiskörper ist insbesondere ein länglicher Körper. Das heisst, seine Länge ist wesentlich grösser als seine Breite. Die Drehachsen der Laufrollen sind insbesondere quer zur Längen- und Breitenausdehnung und parallel zur Höhenausdehnung des Basiskörpers ausgerichtet.

Der Basiskörper kann aus Metall oder Kunststoff sein. Der Basiskörper kann zum Beispiel mittels Spritzgiessen hergestellt sein. Der Basiskörper kann zum Beispiel einteilig hergestellt sein. Dabei können eines oder mehrere der nachfolgenden

Elemente, wie zum Teil oben bereits erwähnt, bereits bei der Herstellung in den einteiligen Basiskörper integriert werden:
- Halteglied;
- Mitnehmerkontaktelement;
- Eingriff- bzw. Befestigungsabschnitt;
- Aussparung;
- Achsstummel.

Gemäss einer Weiterbildung ist am Basiskörper eine Seitenführungsrolle angeordnet. Die Drehachse der Scitcnführungsrollc ist insbesondere senkrecht zu den Drehachsen der Laufrollen ausgerichtet. Die Seitenführungsrolle dient zur seitlichen Führung des Förderorgans quer zur Laufrichtung entlang eines Längsführungskörper.

Die Seitenführungsrollen dienen dem Abrollen des Förderorgans an seitlichen Führungsflächen am Längsführungskörper. Die Führungsflächen können insbesondere durch Stirnseiten von, die Laufflächen ausbildenden Führungsleisten ausgebildet werden.

Die Erfindung betrifft im Weiteren auch eine Förderanlage, insbesondere eine Hängeförderanlage mit mehreren der oben beschriebenen, erfindungsgemässen Förderorganen zum Fördern von Gegenständen entlang einer Förderbahn. Die Förderanlage enthält einen Längsführungskörper, welcher einen Führungskanal ausbildet, entlang welchem die Förderorgane rollend bewegbar sind.

Das laufrollengeführte Förderorgan kann auch als Förderwagen oder "Carrier" bezeichnet werden.

Der Längsführungskörper ist in einer hängenden Förderung oberhalb des Haltegliedes des Förderorgans angeordnet.

Der Längsführungskörper umfasst insbesondere ein offenes Hohlprofil mit einem den Führungskanal ausbildenden Profilhohlraum. Im Profilhohlraum werden die Laufflächen für mindestens zwei, insbesondere für sämtliche Laufrollen des Förderorgans ausgebildet.

Der Längsführungskörper weist einen Führungsspalt auf. Der Führungsspalt, welcher bereits weiter oben beschrieben wurde, trennt einen aussen liegenden Abschnitt des Basiskörpers mit Halteglied von einem im Führungskanal liegenden Abschnitt des Basiskörpers mit Laufrollen.

Der Längsführungskörper kann querschnittlich betrachtet einteilig, oder mehrteilig, insbesondere zweiteilig ausgebildet sein. So kann der Längsführungskörper beispielsweise aus zwei zusammengefügten Halbschalen gefertigt sein.

Der Längsführungskörper kann ein Extrusionsprofil sein. Der Längsführungskörper kann ein gewalztes Profil sein.

Wie bereits erwähnt, ist ein Abschnitt des Förderorgans mit mindestens einer Laufrolle von jeweils einer Seite des Basiskörpers im Führungskanal des Längsführungskörpers rollend bewegbar angeordnet.

Gemäss einer Weiterbildung der Erfindung ist ein Abschnitt des Förderorgans mit sämtlichen Laufrollen im Führungskanal des Längsführungskörpers rollend bewegbar angeordnet.

Das Förderorgan ist insbesondere als Innenläufer ausgebildet. Ein Innenläufer zeichnet sich dadurch aus, dass die Laufflächen für die Laufrollen des Förderorgans im Führungskanal angeordnet sind bzw. ausgebildet werden. Das heisst, das Förderorgan rollt mit seinen Laufrollen im Führungskanal ab.

Der Längsführungskörper bzw. dessen Profilhohlraum bildet insbesondere insgesamt vier Laufflächen für die Laufrollen aus.

Der Längsführungskörper enthält insbesondere mindestens zwei einander gegenüber liegende Führungsleisten, welche den dazwischen liegenden Führungsspalt ausbilden, durch welchen sich der Basiskörper erstreckt. Eine solche Anordnung wurde bereits weiter oben erwähnt. Die Führungsleisten bilden insbesondere jeweils eine Lauffläche aus.

Gemäss einer Weiterbildung enthält der Längsführungskörper zwei Führungsleisten, welche jeweils auf einer Ober- und Unterseite eine Lauffläche im Profilhohlraum ausbilden. Die Führungsleisten bilden so im Profilhohlraum insgesamt vier Laufflächen für die vier Laufrollen aus.

Gemäss einer anderen Weiterbildung enthält der Längsführungskörper vier Führungsleisten, welche im Profilhohlraum jeweils eine und insgesamt vier Laufflächen für die vier Laufrollen ausbilden.

Bei einer Bewegung des Führungsorgans in Förderrichtung rollt auf jeder Führungsleiste jeweils eine Laufrolle des Führungsorgans ab.

Gemäss einer Weiterbildung enthält die Förderanlage eine Mitnahmeeinrichtung mit einer Mehrzahl von Mitnehmern, welche zur Mitnahme der Förderorgane mit Mitnahmekontaktelementen an den Förderorganen kooperieren.

Die Mitnehmer sind insbesondere an einem Mitnahmeorgan der Mitnahmeeinrichtung angeordnet. Das Mitnahmeorgan und mit diesem die Mitnehmer sind entsprechend angetrieben.

Das Mitnahmeorgan ist insbesondere ein flexibler Längskörper, wie Kette, Riemen oder Band. Die Mitnehmer können Stifte, Zapfen oder Nocken sein. Die Mitnehmer können auch Teil des flexiblen Längskörpers selbst sein und zum Beispiel durch die besondere Geometrie des Längskörpers ausgebildet werden.

Die Mitnahmeeinrichtung kann auch einen Bürstenantrieb mit in Förderrichtung bewegten Borsten umfassen, welche mit den Förderorganen einen Mitnahmekontakt ausbilden. Die Borsten können an einem Mitnahmeorgan angeordnet sein. Separate Mitnahmekontaktelemente an den Förderorganen sind bei dieser Ausführungsvariante unter Umständen nicht notwendig.

Das Mitnahmeorgan kann in einem Führungskanal des Längsführungskörpers in Laufrichtung des Förderorgans geführt sein. Die Führung kann z. B. eine Gleitführung sein.

Die Förderanlage kann ferner auch als Schwerkraftförderer ausgelegt sein. Hier werden die Förderorgane durch die Schwerkraft unterstützt angetrieben.

Die Bewegung der Förderorgane erfolgt insbesondere entlang des Längsführungskörpers. Dieser bildet die Förderbahn aus.

Die Förderorgane sind insbesondere voneinander unabhängig bewegbar. Das heisst, die Förderorgane sind während ihrer Bewegung entlang der Förderbahn insbesondere nicht permanent miteinander direkt oder indirekt mechanisch gekoppelt.

Dank der kreuzweise gegengleich versetzten Anordnung von jeweils zwei Laufrollen wird eine in Förderrichtung kippsichere Führung der Förderorgane im Führungskanal erreicht. Das heisst, die Förderwagen können in einer hängenden Lage beispielsweise auch bei Beschleunigungen nicht mehr in Förderrichtung nach vorne oder nach hinten ausgelenkt, das heisst gekippt werden.

Dadurch kann auch ein Schwingen bzw. Wackeln der Förderorgane bzw. der daran aufgehängten Gegenständen bei wechselnden Beschleunigungen verhindert werden.

Da die Förderorgane in Förderrichtung bzw. in Laufrichtung durch die erfindungsgemässe Laufrollenanordnung stabilisiert sind, braucht es auch keine zusätzlichen mechanischen Stabilisierungsmassnahmen, welche zum Zweck haben, die Förderorgane in eine stabile Lage bzw. Ausrichtung in Laufrichtung zu bringen.

Durch das Entfallen solcher Stabilisierungsmittel, welche in der Regel an der Antriebskette vorgesehen sind, können konstruktiv einfachere und entsprechend kostengünstigere Antriebsketten eingesetzt werden.

Durch die stabilere Führung kann das Förderorgan zudem auch grössere Traglasten aufnehmen. So erlaubt das erfindungsgemässe Förderorgan Traglasten von bis zu 10 kg. Bisherige Förderorgane, wie sie zum Beispiel in der Beschreibungseinleitung als Stand der Technik beschrieben werden, sind dahingegen lediglich für Gewichtslasten von bis zu 3 kg ausgelegt.

Im Weiteren erlaubt die erfindungsgemässe Laufrollenanordnung auch eine Erhöhung der Auflagepunkte am Führungsprofil. So kann durch eine entsprechende Rollenführung vorgesehen sein, dass die Traglast, auch Auflagelast bzw. Gewichtslast genannt, auf sämtliche vier Laufrollen gleichmässig verteilt wird.

Dies ist insbesondere auch bei der Zwischenspeicherung von Bedeutung, bei welcher die Gefahr besteht, dass die ruhenden, jedoch belasteten Laufrollen mit der Zeit abplatten, was zu einem unruhigen Lauf der Laufrollen und folglich der Förderorgane bei einer späteren Förderung führt.

Da die Laufrollen des als Innenläufer ausgebildeten und im Führungskanal des Längsführungskörpers geführten Förderorgans vom Längsführungskörper ummantelt sind, ist die Betriebssicherheit auch bei Hängeförderanlagen gewährleistet, bei welchen der Längsführungskörper auf Kopfhöhe angeordnet ist. Ferner sind die Laufrollen auf diese Weise auch besser gegen Verschmutzung und ungewollten äusseren Einflüssen geschützt.

Die besondere Ausgestaltung des Förderorgans, welche eine Überlappung mindestens der Laufrollen mit dem Basiskörper eines benachbarten, gleichartigen Förderorgans ermöglicht, erlaubt neben der optionalen gegenseitigen, vertikalen Sicherung auch eine dichte und platzsparende Aneinanderreihung der Fördcrorganc in Laufrichtung bzw. Förderrichtung.

Eine platzsparende Aneinanderreihung der Förderorgane ist insbesondere in Speicherräumen wichtig, in welchen Förderorgane mit den an diesen hängenden Gegenständen vor der Weiterförderung zwischengespeichert werden sollen.

Ferner ist eine platzsparende Aneinanderreihung der Förderorgane auch in Leerspeicherräumen wichtig, in welchen leere Förderorgane bis zu ihrer Bereitstellung zwischengespeichert werden.

Die erfindungsgemässe Anordnung von mehreren Laufrollen am Basiskörper, welche mit Laufflächen auf unterschiedlichen Ebenen verbunden ist, eröffnet auch neue Möglichkeiten bezüglich der Gestaltung von Weichen und der Führung der Förderorgane über Weichen zwecks Bewegung der Förderorgane entlang unterschiedlicher Förderwege.

Da erfindungsgemäss jeweils immer zwei Laufrollen auf in einer gemeinsamen Ebene liegenden Laufflächen abrollen, ist auch eine sichere und stabile Führung der Förderorgane über Weichen möglich, wo nicht mehr sämtliche Laufrollen des Förderorgans zur Abstützung bzw. Stabilisierung beitragen.

Im Folgenden wird der Erfindungsgegenstand anhand von Ausführungsbeispielen, welche in den beiliegenden Figuren dargestellt sind, näher erläutert. Es zeigen jeweils schematisch:
- Figur 1a: eine perspektivische Ansicht eines erfindungsgemässen Förderorgans;
- Figur 1b: eine Seitenansicht des Förderorgans nach Figur 1a;
- Figur 1c: eine Frontansicht des Förderorgans nach Figur 1a und 1b;
- Figur 2: eine Seitenansicht zweier hintereinander in Überlappungsposition aneinander gereihten Förderorganen nach Figur 1a-1c;
- Figur 3: eine Seitenansicht eines Ausschnittes einer Förderanlage mit zwei Förderorganen in Überlappungsposition gemäss Figur 2;
- Figur 4: eine Frontansicht eines Ausschnittes einer Förderanlage mit einem Führungsprofil gemäss einer ersten Ausführungsform und einem Förderorgan nach Figur 1 bis 2;
- Figur 5: eine Frontansicht eines Ausschnittes einer Förderanlage mit einem Führungsprofil gemäss einer zweiten Ausführungsform und einem Förderorgan nach Figur 1a-1c;
- Figur 6: eine Frontansicht eines Ausschnittes einer Förderanlage mit einem Führungsprofil gemäss einer dritten Ausführungsform und einem Förderorgan nach Figur 1a-1c;
- Figur 7: eine Seitenansicht einer weiteren Ausführungsform eines erfindungsgemässen Förderorgans.

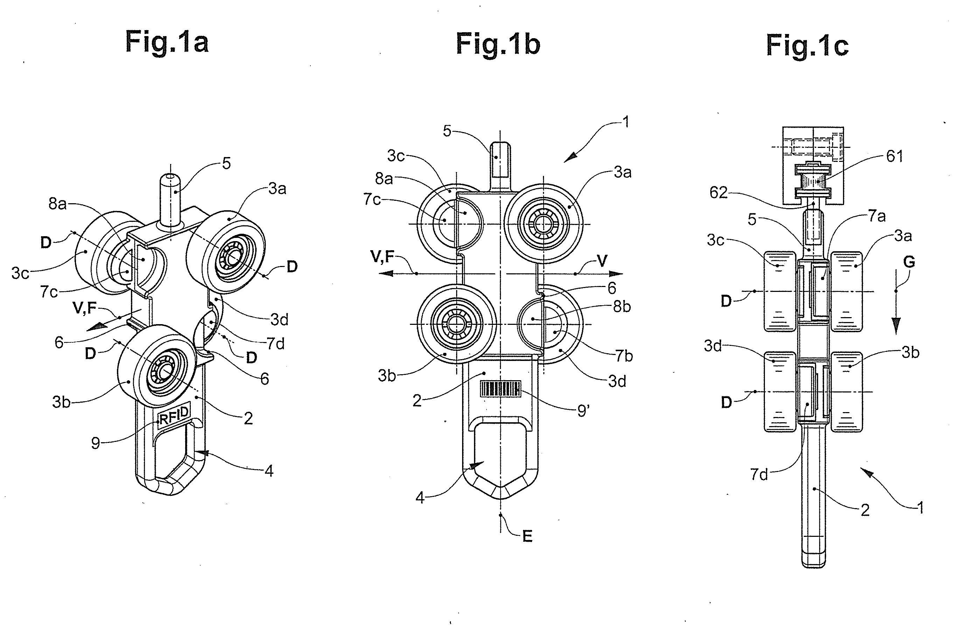

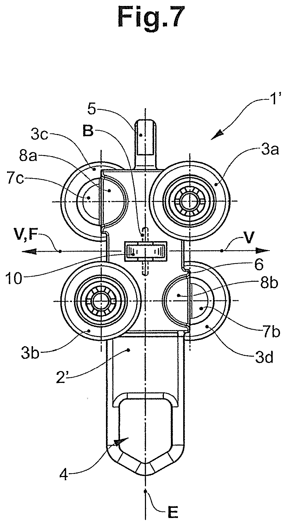

Das Förderorgan 1, 1' gemäss den Figuren 1a bis 1c und 7 umfasst einen länglichen Basiskörper 2, 2', welcher in der frei hängenden Position vertikal ausgerichtet ist. Entsprechend ist auch die in Längsrichtung des Basiskörpers 2, 2' und parallel zu den Drehachsen D der Laufrollen 3a-3d verlaufende Mittelängsebene E vertikal ausgerichtet.

Am Basiskörper 2, 2' sind vier Laufrollen 3a-3d angeordnet, wobei beidseits des Basiskörpers 2, 2' jeweils zwei Laufrollen 3a, 3b; 3c, 3d kreuzweise gegengleich versetzt angeordnet sind.

Die Laufrollen 3a-3d sind in der frei hängenden Position des Förderorgans 1, 1' in einer Parallelprojektion parallel zu den Drehachsen D "X"-förmig angeordnet. Das heisst die Laufrollen 3a, 3b; 3c, 3d sind jeweils paarweise entlang sich kreuzenden Diagonal- bzw. Krcuzschcnkcl angeordnet.

Am Basiskörper 2, 2' ist ein Halteglied 4 in Form einer Halteöse ausgebildet, in welche der Haken eines Kleiderbügels oder einer Tasche eingehängt werden kann. Das Halteglied 4 ist in der frei hängenden Position des Förderorgans 1, 1' unterhalb der Laufrollen 3a-3d angeordnet.

Ferner ist am Basiskörper 2, 2' ein stiftförmiges Mitnehmerkontaktelement 5 ausgebildet. Das Mitnehmerkontaktelement 5 ist in der frei hängenden Position des Förderorgans 1, 1' oberhalb der Laufrollen 3a-3d angeordnet.

Die Laufrollen 3a-3d sind über Befestigungsabschnitte 7a-7d am Basiskörper 2, 2' befestigt. Hierzu sind am Basiskörper 2, 2' Achsstummel angeordnet, auf welche die Laufrollen 3a-3d aufsteckbar oder schraubbar sind.

Die Befestigungsabschnitte 7a-7d und mit ihnen auch die daran befestigten Laufrollen 3a-3d ragen in einer Laufrichtung V parallel zur Flächennormalen der Längsmittelebene E über den Basiskörper 2, 2' hinaus bzw. stehen diesem vor.

Der Basiskörper 2, 2' bildet an jenen beiden Seiten, an welchen die Laufrollen 3a-3d in Laufrichtung V über den Basiskörper 2, 2' hinaus ragen Kontaktabschnitte 6 aus, welche derart angeordnet und ausgebildet sind, dass eine Berührung mit einem vor- bzw. nachlaufenden, gleichartig ausgebildeten Förderorgan 1, 1' über die Kontaktabschnitte 6 erfolgt.

Die dem Basiskörper 2, 2' in genannter Weise vorstehenden Befestigungsabschnitte 7a-7d sind im vorliegenden Ausführungsbeispiel halbkreisförmig ausgebildet. Sie können jedoch auch eine beliebig andere Form aufweisen.

Im Weiteren sind am Basiskörper 2, 2' Aussparungen 8a-8d zur passgcnaucn Aufnahme jeweils eines vorstehenden Befestigungsabschnittes 7a-7d eines benachbarten, gleichartig ausgebildeten Förderorgans 1, 1' angeordnet.

Die Aussparungen 8a-8d sind im vorliegenden Ausführungsbeispiel halbkreisförmig ausgebildet. Sie können jedoch auch eine andere Form aufweisen.

Die Aussparungen 8a-8d sind ferner am Basiskörper 2, 2' jeweils versetzt gegenüber einem vorstehenden Befestigungsabschnitt 7a-7d am selben Basiskörper 2, 2' angeordnet. Die Konturen der Aussparungen 8a-8d und der entsprechenden Befestigungsabschnitte 7a-7d ergänzen sich in dieser Anordnung jeweils zu einem Vollkreis.

Die halbkreisförmige Geometrie von Aussparung 8a-8d und Befestigungsabschnitt 7a- 7d erlauben die vertikale Selbstzentrierung von, in der hängenden Position zusammen geschobenen Förderorganen 1, 1'.

Werden nun zwei Förderorgane 1, 1' in Laufrichtung V soweit zusammengeschoben, dass sich diese über die Kontaktabschnitte 6 berühren, so gelangen die Befestigungsabschnitte 7a-7d jeweils in einen Eingriff mit den diesen zugeordneten Aussparungen 8a-8d benachbarter Förderorgane. Die Befestigungsabschnitte 7a-7d haben daher auch die Funktion von Eingriffabschnitten.

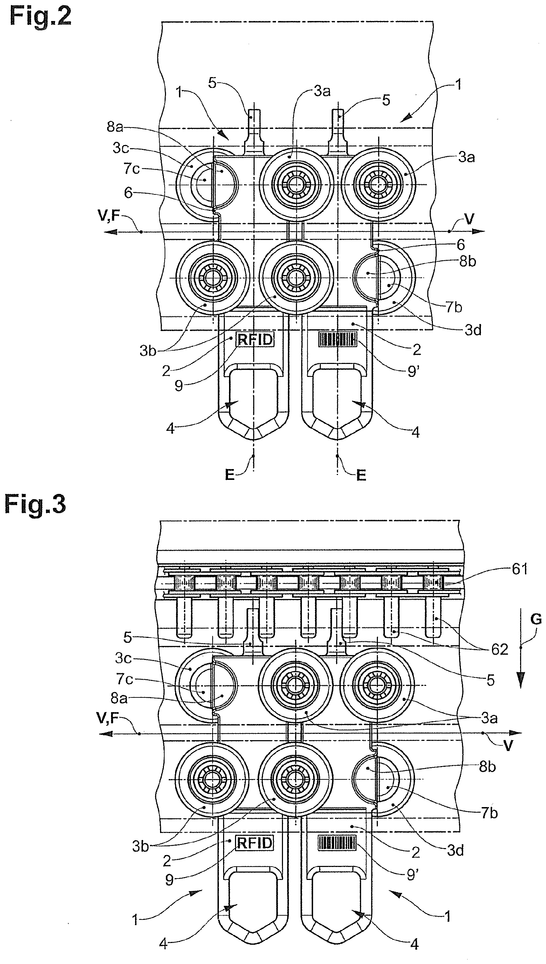

Die Basiskörper 2, 2' zweier benachbarter Förderorgane 1, 1', welche sich an ihren Kontaktabschnitten berühren, überlappen sich folglich am Ort des Eingriffs des Befestigungsabschnittes 7a-7d in die Aussparung 8a-8d. Gleichzeitig überlappen auch die Laufrollen 3a-3d mit dem Basiskörper 2, 2' der benachbarten Förderorgane 1, 1' (siehe auch Figur 2).

Durch den Eingriff der Befestigungsabschnitte 7a-7d in die Aussparungen 8a-8d benachbarter Förderorgane 1, 1' sind die Förderorgane 1, 1' in ihrer hängender Position gegen eine vertikale Verschiebung relativ zueinander gesichert. Die Zusammenführung von Befestigungsabschnitt 7a-7d und Aussparung 8a-8d führt bezüglich der Sicherung gegen eine vertikale Verschiebung zu einem Formschluss.

Am Basiskörper 2 gemäss den Figuren 1a bis 1c ist ein Identifikationselement 9, 9' angeordnet, welches gemäss Figur 1a als RFID-Transponder 9 und gemäss Figur 1b als Strichcode 9' vorliegt.

Die weitere Ausführungsform eines Förderorgans 1' nach Figur 7 unterscheidet sich von der Ausführungsform nach Figur 1a-1c durch Seitenführungsrollen 10. Die Seitenführungsrollen 10 sind in einer Ausnehmung im Basiskörper 2' um die Drehachse B drehbar gelagert. Die Drehachse B ist senkrecht zu den Drehachsen D der Laufrollen 3a-3d ausgerichtet und verläuft parallel zur Mittelängsebene E.

Die Seitenführungsrollen 10 rollen relativ zur Laufrichtung V seitlich an einer Führungsfläche am Längsführungskörper ab und stabilisieren so das Förderorgan zur Seite hin. Die Führungsfläche wird gemäss der vorliegender Ausführungsform durch die Stirnseiten von, die Laufflächen ausbildenden Führungsleisten ausgebildet.

Die dazugehörige Förderanlage enthält nun zum Antreiben der Förderorgane 1 eine Mitnahmeeinrichtung mit einem als Mitnahmekette 61 ausgebildetem Mitnahmeorgan. An der Mitnahmekette 61 sind eine Mehrzahl von in Richtung Förderorgan 1 vorstehenden Mitnehmer 62 angeordnet (siehe Figur 3).

Die Mitnehmerkontaktelemente 5 der Förderorgane 1 greifen nun in der Antriebsstellung zwischen die Mitnehmer 62 der Mitnahmekette 61 ein. Die Mitnehmer 62 werden nun durch die sich in Förderrichtung F bewegende Mitnahmekette 61 ebenfalls in Förderrichtung F bewegt und kommen zwangsläufig in Mitnahmekontakt mit den Mitnehmerkontaktelementen 5.

Durch die fortgeführte Bewegung der Mitnehmer 62 in Förderrichtung F werden die Förderorgane 1 über den Mitnahmekontakt ebenfalls in Förderrichtung F bewegt.

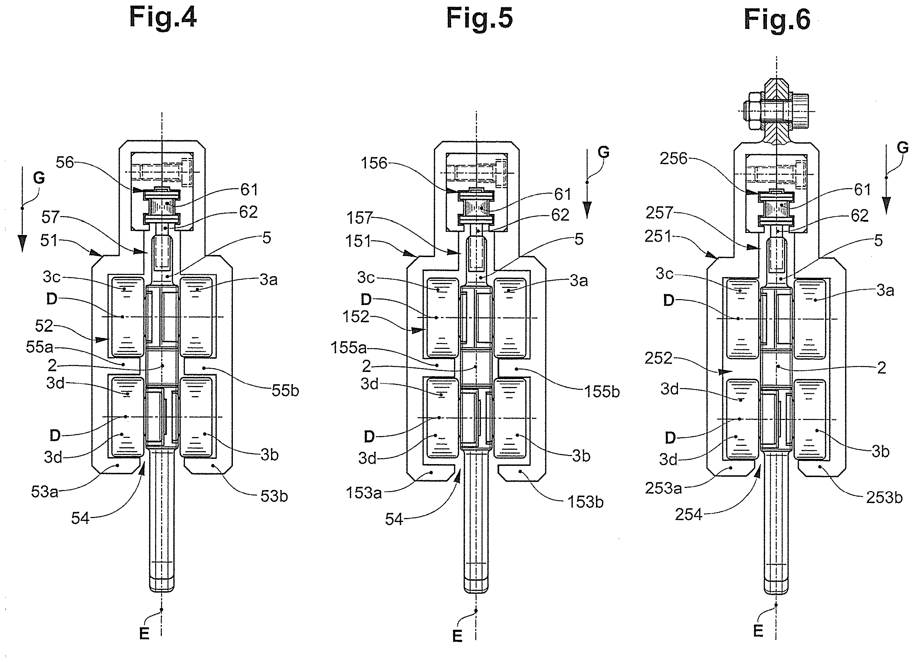

Das Förderorgan 1 ist als so genannter Innenläufer ausgebildet. Das heisst, die Laufrollen 7a-7d rollen auf Laufflächen im Inneren des Führungskanals 52, 152, 252 eines als Hohlprofilkörper 51, 151, 251 ausgebildeten Längsführungskörpers ab (siehe Figuren 4 bis 6).

Der Hohlprofilkörper 51, 151, 251 ist als offenes Hohlprofil ausgebildet und weist einen schlitzartigen Führungsspalt 54, 154, 254 auf, welcher entlang der Laufrichtung V verläuft.

Der schlitzartige Führungsspalt 54, 154, 254 wird durch zwei, einander gegenüber liegenden und parallel zueinander verlaufenden Führungsleisten 53a, 53b; 153a, 153b; 253a, 253b des Hohlprofilkörper 51, 151, 251 begrenzt bzw. durch diese ausgebildet.

Der Basiskörper 2 verläuft durch den genannten schlitzförmigen Führungsspalt 54, 154, 254, welcher einen aussen liegenden Abschnitt des Basiskörpers 2 mit dem Halteglied 4 von einem innen liegenden Abschnitt des Basiskörpers 2 mit den Laufrollen 7a-7d trennt.

Die Führungsprofile 51, 151, 251 gemäss den in den Figuren 4 bis 6 gezeigten Ausführungsformen weisen einen ersten Führungskanal 52, 152, 252 zur Führung der Laufrollen 7a-7d des Förderorgans 1 sowie einen zweiten, bezüglich Schwerkraftrichtung G oberhalb des ersten Führungskanals 52, 152, 252 angeordneten zweiten Führungskanal 56, 156, 256 zur Führung einer Mitnahmekette 61. Die beiden Führungskanäle 52, 152, 252; 56, 156, 256 sind über einen schlitzartigen Verbindungskanal 57, 157, 257 miteinander verbunden. Die Mitnehmerkontaktelemente 5 der Basiskörper 2 sowie die Mitnehmer 62 der Mitnahmekette 61 greifen in den Vcrbindungskanal 57, 157, 257 ein, so dass der Mitnahmekontakt im Verbindungskanal 57, 157, 257 ausgebildet wird.

Die den schlitzartigen Führungsspalt 54, 154, 254 ausbildenden Führungsleisten 53a, 53b; 153a, 153b; 253a, 253b bilden gemäss den beiden Ausführungsformen nach Figur 4 und 6 im Führungskanal 52, 152, 252 eine Lauffläche für die in Schwerkraftrichtung G unteren Laufrollen 3b, 3d aus.

Das Führungsprofil 51, 151 gemäss den beiden Ausführungsformen nach Figur 4 und 5 weist nun oberhalb der, den Führungsspalt 54, 154 ausbildenden Führungsleisten 53a, 53b; 153a, 153b zwei weitere, in den Führungskanal 52, 152 ragende, einander gegenüber liegende und parallel zueinander verlaufende, zweite Führungsleisten 55a, 55b; 155a, 155b auf.

Die zweiten Führungsleisten 55a, 55b; 155a, 155b sind so im Führungskanal 52, 152 angeordnet, dass die oberen Laufrollen 3a, 3c oberhalb und die unteren Laufrollen 3b, 3d unterhalb der zweiten Führungsleisten 55a, 55b; 155a, 155b vorbei geführt werden.

Entsprechend sind die beiden Laufrollen 3a-3d auf den jeweiligen Seiten des Basiskörpers 2 jeweils derart gegenseitig versetzt und voneinander beabstandet angeordnet, dass die zweiten Führungsleisten 55a, 55b; 155a, 155b zwischen den jeweiligen Laufrollenpaarungen 3a, 3b; 3c, 3d auf der jeweiligen Seite des Basiskörpers 2 hindurchführen.

Gemäss der Ausführungsform nach Figur 4 sind die ersten und zweiten Führungsleisten 53a, 53b; 55a, 55b sowie die Laufrollen 3a-3d derart angeordnet, dass die unteren Laufrollen 3b, 3d im Führungskanal 52 den ersten Führungsleisten 53a, 53b aufliegen und entlang von diesen ausgebildeten Laufflächen abrollen und die oberen Laufrollen 3a, 3c im Führungskanal 52 den zweiten Führungsleisten 55a, 55b aufliegen und entlang von diesen ausgebildeten Laufflächen abrollen. Entsprechend drehen die oberen Laufrollen 3a, 3c gegenüber den unteren Laufrollen 3b, 3d gleichsinnig.

Gemäss der Ausführungsform nach Figur 5 sind die zweiten Führungsleisten 155a, 155b sowie die Laufrollen 3a-3d derart angeordnet, dass die unteren Laufrollen 3b, 3d von unten den zweiten Führungsleisten 155a, 155b anliegen und entlang von diesen ausgebildeten, unteren Laufflächen abrollen und die oberen Laufrollen 3a, 3c den zweiten Führungsleisten 155a, 155b aufliegen und entlang von diesen ausgebildeten oberen Laufflächen abrollen. Die obere und untere Lauffläche sind einander entgegengesetzt angeordnet. Entsprechend drehen die oberen Laufrollen 3a, 3c gegenüber den unteren Laufrollen 3b, 3d gegensinnig.

Gemäss der Ausführungsform nach Figur 6 enthält das Führungsprofil keine in den Profilhohlraum hinein ragenden, zweiten Führungsleisten wie dies in Figur 4 und 5 der Fall ist. Hier sind das Führungsprofil 251 sowie die Laufrollen 3a-3d vielmehr derart ausgebildet und angeordnet, dass die unteren Laufrollen 3b, 3d im Führungskanal 52 den ersten Führungsleisten 53a, 53b aufliegen und entlang von diesen ausgebildeten Laufflächen abrollen und die oberen Laufrollen 3a, 3c oberen Profilwänden anliegen und entlang von diesen ausgebildeten oberen Laufflächen abrollen. Die oberen und unteren Lauffläche sind einander entgegengesetzt angeordnet. Entsprechend drehen die oberen Laufrollen 3a, 3c gegenüber den unteren Laufrollen 3b, 3d gegensinnig.

Die Führungsprofile 51, 151, 251 gemäss den Figuren 4 bis 6 können in der Förderanlage auch in einer Kombination eingesetzt werden. So kann beispielsweise in Bereich einer Weiche ein Wechsel vom einen zum anderen Führungsprofil 51, 151, 251 vorgesehen sein.

## Patentansprüche

1. Förderanlage mit laufrollengeführten Förderorganen (1), enthaltend jeweils einen Basiskörper (2), mehrere, an zwei einander entgegen gesetzt liegenden Seiten am Basiskörper (2) drehbar gelagerte Laufrollen (3a-3d), wobei der Basiskörper (2) zwischen den auf beiden Seiten angebrachten Laufrollen (3a-3d) angeordnet ist, und ein am Basiskörper (2) angeordnetes Halteglied (4) zum Halten eines zu fördernden Gegenstandes, sowie mit einem Längsführungskörper (51, 151, 251), welcher einen Führungskanal (52, 152, 252) ausbildet, entlang welchem die Förderorgane (1) rollend bewegbar sind, wobei die Förderorgane (1) mit den Laufrollen (3a-3d) jeweils derart ausgebildet sind, dass ein Abschnitt des Förderorgans (1) mit mindestens jeweils einer Laufrolle (3a-3d) der beiden Seiten des Basiskörpers (2) im Führungskanal (52) des Längsführungskörpers (51) rollend bewegbar ist,
**dadurch gekennzeichnet, dass**
die Laufrollen (3a-3d) jeweils zwei an den beiden Seiten des Basiskörpers (2) kreuzweise gegengleich versetzt angeordnete Laufrollen (3a-3d) sind.

2. Förderanlage nach Anspruch 1, **gekennzeichnet durch** ein am Basiskörper (2) angeordnetes Mitnehmerkontaktelement (5) zur Herstellung eines Mitnahmekontaktes mit einem Mitnehmer (62) einer Mitnahmeeinrichtung (61).

3. Förderanlage nach einem der Ansprüche 1 bis 2, **dadurch gekennzeichnet, dass** mindestens eine Laufrolle (3a-3d) in einer Laufrichtung (V) dem Basiskörper (2) vorsteht.

4. Förderanlage nach Anspruch 3, **dadurch gekennzeichnet, dass** der Basiskörper (2) an jener Seite, an welcher die mindestens eine Laufrolle (3a-3d) über den Basiskörper (2) vorsteht, einen Kontaktabschnitt (6) ausbildet, so dass eine mögliche Berührung mit einem vor- bzw. nachlaufenden, gleichartig ausgebildeten Förderorgan (1) mindestens am Kontaktabschnitt (6) erfolgt.

5. Förderanlage nach Anspruch 3 oder 4, **dadurch gekennzeichnet, dass** bei einer Berührung mit einem vor- bzw. nachlaufenden, gleichartig ausgebildeten Förderorgan (1) am Kontaktabschnitt (6) die mindestens eine Laufrolle (3a-3d) in Laufrichtung (V) mit dem benachbarten Förderorgan (1) überlappt.

6. Förderanlage nach einem der Ansprüche 3 bis 5, **dadurch gekennzeichnet, dass** am Basiskörper (2) mindestens ein Eingriffabschnitt für eine Laufrolle (3a-3d) angeordnet ist, welcher in Laufrichtung (V) dem Basiskörper (2) vorsteht.

7. Förderanlage nach Anspruch 6, **dadurch gekennzeichnet, dass** am Basiskörper (2) mindestens eine Aussparung (8a-8d) zur Aufnahme eines Eingriffabschnittes (7a-7d) eines benachbarten, gleichartig ausgebildeten Förderorgans (1) angeordnet ist.

8. Förderanlage nach Anspruch 6 und 7, **dadurch gekennzeichnet, dass** die mindestens eine Aussparung (8a-8d) und der mindestens eine Eingriffabschnitt (7a-7d) derart ausgebildet sind, dass zwei benachbarte, gleichartig ausgebildete und sich am Kontaktabschnitt (6) berührende Förderorgane (1) gegen eine Verschiebung senkrecht zur Laufrichtung (V) und senkrecht zu den Drehachsen (D) der Laufrollen (3a-3d) gesichert ist.

9. Förderanlage nach einem der Ansprüche 6 bis 8, **dadurch gekennzeichnet, dass** das Förderorgan (1) eine Mehrzahl von Aussparung (8a-8d) und ein Mehrzahl von Eingriffabschnitten bzw. Befestigungsabschnitten (7a-7d) für jeweils eine Laufrolle (3a-3d), insbesondere zur überlappenden Anordnung der Laufrollen (3a-3d) zwischen benachbarten, gleichartig ausgebildeten Förderorganen (1), enthält.

10. Förderanlage nach einem der Ansprüche 1 bis 9, **dadurch gekennzeichnet, dass** am Basiskörper (2) eine Seitenführungsrolle (10) mit einer senkrecht zu den Drehachsen (A) der Laufrollen (3a-3d) ausgerichteten Drehachse (B) zur seitlichen Führung des Förderorgans (1) quer zur Laufrichtung (V) entlang des Längsführungskörper (51, 151, 251) angeordnet ist.

11. Förderanlage nach einem der Ansprüche 1 bis 10, **dadurch gekennzeichnet, dass** der Längsführungskörper (51, 151, 251) einen Führungsspalt (54, 154, 254) aufweist, durch welchen sich der Basiskörper (2) erstreckt.

12. Förderanlage nach einem der Ansprüche 1 bis 11, **dadurch gekennzeichnet, dass** der Basiskörper (2) der Förderorgane (1) sich durch den Führungsspalt (54, 154, 254) erstreckt, wobei sich ein erster, das Halteglied (4) aufnehmender Abschnitt ausserhalb und ein zweiter, mindestens zwei Laufrollen (3a-3d) aufnehmender Abschnitt des Basiskörpers (2) innerhalb des Führungskanals (52, 152, 252) befindet.

13. Förderanlage nach einem der Ansprüche 1 bis 12, **gekennzeichnet durch** eine Mitnahmeeinrichtung (61) mit einer Mehrzahl von Mitnehmern (62), welche zur Mitnahme der Förderorgane (1) mit Mitnahmekontaktelementen (5) an den Förderorganen (1) kooperieren.

14. Förderanlage nach einem der Ansprüche 1 bis 13, **dadurch gekennzeichnet, dass** die Förderorgane (1) voneinander unabhängig bewegbar sind.

## Claims

1. A conveying facility with roller-guided conveying elements (1), comprising in each case a basis body (2), several rollers (3a-3d) which are rotatably mounted on the basis body (2) at two sides which lie opposed to one another, wherein the basis body (2) is arranged between the rollers (3a-3d) attached at both sides, and a holding member (4) which is arranged on the basis body (2) and is for holding an object to be conveyed, as well as with a longitudinal guidance body (51, 151, 251) forming a guide channel (52, 152, 252), along which guide channel the conveying elements (1) are rollingly movable, wherein the conveying elements (1) with the rollers (3a-3d) are designed in a manner such that a section of the conveying elements (1), with in each case at least one roller (3a-3d) of the two sides of the basis body (2) is rollingly movable in the guide channel (52) of the longitudinal guidance body (51),
**characterised in that**
the rollers (3a-3d) in each case are two rollers (3a-3) which are arranged oppositely and equally offset in a crosswise manner on the two sides on the basis body (2).

2. A conveying facility according to claim 1, **characterised by** a dog contact element (5) arranged on the basis body (2), for creating a driving contact with a dog (62) of a driver device (61).

3. A conveying facility according to one of the claims 1 to 2, **characterised in that** at least one roller (3a-3d) projects beyond the basis body (2) in a running direction (V).

4. A conveying facility according to claim 3, **characterised in that** the basis body (2) forms a contact section (6) at that side, at which the at least one roller (3a-3d) projects beyond the basis body (2), so that a possible contact with a leading or trailing, equally designed conveying element (1) is effected at least at the contact section (6).

5. A conveying facility according to claim 3 or 4, **characterised in that** the at least one roller (3a-3d) overlaps with the adjacent conveying element (1) in the running direction (V), given a contact with a leading or trailing, equally designed conveying element (1) at the contact section (6).

6. A conveying facility according to one of the claims 3 to 5, **characterised in that** at least one engagement section for a roller (3a-3d) is arranged on the basis body (2), said engagement section projecting beyond the basis body (2) in the running direction (V).

7. A conveying facility according to claim 6, **characterised in that** at least one recess (8a-8d) for receiving an engagement section (7a-7d) of an adjacent, equally designed conveying element (1) is arranged on the basis body (2).

8. A conveying facility according to claim 6 and 7, **characterised in that** the at least one recess (8a-8d) and the at least one engagement section (7a-7d) are designed in a manner such that two adjacent, equally designed conveying elements (1) contacting at the contact section (6) are secured against a displacement perpendicular to the running direction (V) and perpendicular to the rotation axes (D) of the rollers (3a-3d).

9. A conveying facility according to one of the claims 6 to 8, **characterised in that** the conveying element (1) comprises a plurality of recesses (8a-8d) and a plurality of engagement sections or fastening sections (7a-7d) for a roller (3a-d) in each case, in particular for the overlapping arrangement of the rollers (3a-3d) between adjacent, equally designed guide elements (1).

10. A conveying facility according to one of the claims 1 to 9, **characterised in that** a side guidance roller (10) with a rotation axis (B) aligned perpendicularly to the rotation axes (A) of the rollers (3a-3d) is arranged on the basis body (2), for the lateral guidance of the conveying element (1) transversely to the running direction (V) along a longitudinal guidance body (51, 151,251).

11. A conveying facility according to one of the claims 1 to 10, **characterised in that** the longitudinal guidance body (51, 151, 251) comprises a guide gap (54, 154, 254), through which the basis body (2) extends.

12. A conveying facility according to one of the claims 1 to 11, **characterised in that** the basis body (2) of the conveying elements (1) extends through the guide gap (54, 154, 254), wherein a first section of the basis body which receives the holding member (4) is located outside the guide channel (52, 152, 252) and a second section of the basis body (2) which receives at least two rollers (3a-3d) is located within this guide channel (52, 152, 252).

13. A conveying facility according to one of the claims 1 to 12, **characterised by** a driver device (61) with a plurality of dogs (62) which cooperate with dog contact elements (5) on the conveying elements (1), for driving the conveying elements (1).

14. A conveying facility according to one of the claims 1 to 13, **characterised in that** the conveying elements (1) are movable independently of one another.

## Revendications

1. Installation de transport avec des organes de transport (1) guidés par galet, contenant respectivement un corps de base (2), plusieurs galets (3a-3d) logés de manière rotative au niveau de deux côtés se trouvant opposés l'un à l'autre sur le corps de base (2), dans laquelle le corps de base (2) est agencé entre les galets (3a-3d) montés sur les deux côtés, et un organe de retenue (4) agencé sur le corps de base (2) pour la retenue d'un objet à transporter, ainsi qu'avec un corps de guidage longitudinal (51, 151, 251) qui réalise un canal de guidage (52, 152, 252), le long duquel les organes de transport (1) sont mobiles de manière roulante, dans laquelle les organes de transport (1) sont réalisés avec les galets (3a-3d) respectivement de telle manière qu'une section de l'organe de transport (1) soit mobile de manière roulante avec au moins respectivement un galet (3a-3d) des deux côtés du corps de base (2) dans le canal de guidage (52) du corps de guidage longitudinal (51),
**caractérisée en ce que**
les galets (3a-3d) sont respectivement deux galets (3a-3d) agencés en déport en croix de manière inversée au niveau des deux côtés du corps de base (2).

2. Installation de transport selon la revendication 1, **caractérisée par** un élément de contact d'entraînement (5) agencé sur le corps de base (2) pour l'établissement d'un contact d'entraînement avec un élément d'entraînement (62) d'un dispositif d'entraînement (61).

3. Installation de transport selon l'une des revendications 1 à 2, **caractérisée en ce qu'**au moins un galet (3a-3d) dépasse du corps de base (2) dans un sens de roulement (V) .

4. Installation de transport selon la revendication 3, **caractérisée en ce que** le corps de base (2) réalise sur le côté, au niveau duquel l'au moins un galet (3a-3d) dépasse du corps de base (2), une section de contact (6) de sorte qu'un contact possible avec un organe de transport (1) réalisé de manière identique, avançant ou reculant soit effectué au moins sur la section de contact (6).

5. Installation de transport selon la revendication 3 ou 4, **caractérisée en ce qu'**en cas de contact avec un organe de transport (1) réalisé de manière identique, avançant ou reculant sur la section de contact (6), l'au moins un galet (3a-3d) chevauche dans le sens de roulement (V) l'organe de transport (1) contigu.

6. Installation de transport selon l'une des revendications 3 à 5, **caractérisée en ce qu'**au moins une section de prise pour un galet (3a-3d) est agencée sur le corps de base (2), laquelle dépasse dans le sens de roulement (V) du corps de base (2).

7. Installation de transport selon la revendication 6, **caractérisée en ce qu'**au moins un évidement (8a-8d) est agencé sur le corps de base (2) pour la réception d'une section de prise (7a-7d) d'un organe de transport (1) contigu, réalisé de manière identique.

8. Installation de transport selon les revendications 6 et 7, **caractérisée en ce que** l'au moins un évidement (8a-8d) et l'au moins une section de prise (7a-7d) sont réalisés de telle manière que deux organes de transport (1) contigus, réalisés de manière identique et se touchant sur la section de contact (6) soient bloqués contre un déplacement perpendiculairement au sens de roulement (V) et perpendiculairement aux axes de rotation (D) des galets (3a-3d).

9. Installation de transport selon l'une des revendications 6 à 8, **caractérisée en ce que** l'organe de transport (1) contient une pluralité d'évidements (8a-8d) et une pluralité de sections de prise ou sections de fixation (7a-7d) pour respectivement un galet (3a-3d), en particulier pour l'agencement de chevauchement des galets (3a-3d) entre des organes de transport (1) contigus, réalisés de manière identique.

10. Installation de transport selon l'une des revendications 1 à 9, **caractérisée en ce qu'**un rouleau de guidage latéral (10) avec un axe de rotation (B) orienté perpendiculairement aux axes de rotation (A) des galets (3a-3d) est agencé sur le corps de base (2) pour le guidage latéral de l'organe de transport (1) transversalement au sens de roulement (V) le long du corps de guidage longitudinal (51, 151, 251).

11. Installation de transport selon l'une des revendications 1 à 10, **caractérisée en ce que** le corps de guidage longitudinal (51, 151, 251) présente une fente de guidage (54, 154, 254), à travers laquelle le corps de base (2) s'étend.

12. Installation de transport selon l'une des revendications 1 à 11, **caractérisée en ce que** le corps de base (2) des organes de transport (1) s'étend à travers la fente de guidage (54, 154, 254), dans laquelle une première section recevant l'organe de retenue (4) se trouve en dehors du canal de guidage (52, 152, 252) et une seconde section recevant au moins deux galets (3a-3d) du corps de base (2) se trouve à l'intérieur de celui-ci.

13. Installation de transport selon l'une des revendications 1 à 12, **caractérisée par** un dispositif d'entraînement (61) avec une pluralité d'éléments entraînement (62) qui coopèrent pour l'entraînement des organes de transport (1) avec des éléments de contact d'entraînement (5) sur les organes de transport (1).

14. Installation de transport selon l'une des revendications 1 à 13, **caractérisée en ce que** les organes de transport (1) sont mobiles indépendamment les uns des autres.
